Europäisches Patentamt

European Patent Office

Office européen des brevets

(11) Publication number: **0 077 665**
**B1**

(12) **EUROPEAN PATENT SPECIFICATION**

(45) Date of publication of patent specification: **05.06.85**

(21) Application number: **82305509.0**

(22) Date of filing: **15.10.82**

(51) Int. Cl.⁴: **H 02 K 3/32,** H 02 K 15/12,
H 02 G 15/18

(54) **Electrical insulation sleeve.**

(30) Priority: **15.10.81 US 311722**

(43) Date of publication of application:
**27.04.83 Bulletin 83/17**

(45) Publication of the grant of the patent:
**05.06.85 Bulletin 85/23**

(84) Designated Contracting States:
**DE FR GB**

(56) References cited:
**FR-A-1 417 980**
**GB-A- 943 427**
**US-A-2 469 099**
**US-A-3 462 544**

**PATENTS ABSTRACTS OF JAPAN, vol. 4, no.
189, 25th December 1980, page 126 E39;**

(73) Proprietor: **BENTLEY-HARRIS
MANUFACTURING CO.**
**241 Welsh Pool Road**
**Lionville Pennsylvania 19353 (US)**

(72) Inventor: **Bentley, William H., Jr.**
**137 Airdale Road**
**Rosemont Pennsylvania 19010 (US)**

(74) Representative: **Jones, David Colin et al**
**Raychem Limited Intellectual Property Law
Department Swan House 37-39 High Holborn
London WC1 (GB)**

Courier Press, Leamington Spa, England.

## Description

This invention relates to a tubular sleeve, for electrical insulation of an electrical conductor, the sleeve comprising interthreaded, fibrous yarns and an overcoating which is coated onto and substantially covers and seals the exterior surface of the tubular sleeve, further to an electrical apparatus comprising at least one electrical conductor having a sleeve surrounding and intimately contacting said conductor and to a method for electrical insulating of an elongate electrical conductor using said sleeve.

The various functional devices and/or circuits within an electrical apparatus are generally electrically interconnected by elongate electrical conductors (e.g. wires, bus bars, cables, etc.) which are typically electrically insulated. Electrical insulation serves to isolate the conductor from potentially disruptive environmental factors of a mechanical, electrical or chemical nature thereby insuring that current flows when and where desired without interruption.

An electrical motor is one example of an electrical apparatus having electrical conductors which interconnect the various functional devices and/or circuits within the apparatus. The coil leads and the phase connectors which connect the quadrants of the coils of the motor for example require insulation.

An electrical motor also provides an example of the potentially descriptive mechanical, electrical or chemical environmental forces which may affect the conductors, and which may even cause failure of the insulation. Such insulation failure may be caused, for example, by mechanical forces which may be induced by electromagnetic torque or by vibration-induced wearing-away of the insulation against other components of the electrical apparatus. Alternatively or in addition thermal expansion and contraction may cause wear and localized overheating due to the presence of air or vapour pockets which reduces heat transfer may accelerate thermal degradation of the insulation materials and induce stress cracking. Also, oxygen or ozone from electric discharges may enter and cause oxidative degradation of polymeric materials, and water may enter and corrode metal parts or short circuit conductors.

Electrical insulation to protect the conductors may be provided either before or after interconnection of the conductor within the electrical apparatus. To provide insulation before interconnection of the conductor, the insulation material may, for example, be coated or extruded directly onto and around the elongate conductor. The insulation may be polymeric. Such insulation is then usually partially removed, usually from the extremities, as an interconnection is made to or within the electrical apparatus. Alternatively, bare conductors or exposed interconnection points of otherwise insulated conductors may be insulated after interconnection of the conductors by coating (for example, with a polymeric material), by wrapping with an insulating tape, by fitting an insulating sleeve or cap, or by impregnating a porous tape or sleeve with an insulating material such as a polymeric material either, the impregnation being effected before or after positioning the tape on the conductor.

Where insulation is provided by fitting an electrically insulating sleeve or cap the sleeve or cap is a tubular structure fabricated from electrically insulating materials. The simplest sleeve is a one-component tube composed of, for example, a polymeric material, a ceramic material, or an interthreaded yarn (i.e. a braid, a knit, or a woven and sewn fabric).

The insulation value and wear-resistance of insulating sleeves may be improved by providing a dense, thick-walled sleeve or a plurality of nested sleeves of varying diameters. Alternatively, composite sleeves may be employed such as a braided fibreglass sleeve overcoated with a polymeric material or a plurality of overcoatings of polymeric materials.

The insulation value and wear-resistance of a sleeve may be further improved by impregnation of a porous sleeve with an impregnation composition, for example, a resin, prior to installation of the sleeve around a conductor. After installation, the resin-rich pre-impregnated sleeve is compressed against the conductor thereby forcing resin out of the sleeve to improve contact with the conductor. Alternatively the interstices of the sleeve and/or the interstices between the sleeve and the conductor may be impregnated with an impregnation composition, for example by means of a vacuum/pressure impregnation process wherein the impregnation composition is forced into the interstitial areas by alternately pulling a vacuum, then applying pressure.

An example of an impregnated insulation sleeve in an electrical motor is now discussed. The stator of an electrical motor is generally insulated by resin impregnation applied by a vacuum/pressure impregnation process, and is preferably void-free. Resin is forced into the interstitial areas by alternately pulling a vacuum, then applying pressure. Before the stator is impregnated, the motor is generally assembled and pretested. Conductor insulation must be in place during pretest where short term voltages on the order of 6,000 to 8,000 volts may be applied for on the order of a microsecond. Insulating sleeves which are deformably expandable and can be pulled-back along the length of the conductor so that permanent interconnections can be made subsequent to the temporary connections of pretest, are (for this application and many other applications) generally preferred to tape or other types of retrofitted insulation. The interiors of insulation sleeves associated with the conductors of the stator are generally resin impregnated at the same time the stator is impregnated. Sleeve impregnation is also preferably void-free, but resin outflow due to gravity before the resin cures is known to occur and to result in an imperfect impregnation, especially where low viscosity resins are used for penetration of complex structures.

Insulation sleeves are generally selected to have the smallest possible diameter that will fit over the conductor to be placed therewithin, thereby improving the electrical insulation value and wear-resistance by improving the contact of the sleeve with the conductor. Bulky sleeves having a bulky interior, such as a braided asbestos sleeve, are known and have been used for electrical as well as thermal insulation. These sleeves provide an intimate fit with a conductor positioned therein.

A particular example of the use of an impregnated insulation sleeve in an electric motor is described in British Patent 943427. The patent describes a method of securing electrical conductors in slots in the rotor or a dynamo-electric machine comprising forming an electrical insulator closely surrounding the conductor by moulding a fibrous sleeve impregnated with a hardenable synthetic resin material and inserting the conductor and insulator into the slot.

The first aspect of the present invention provides a tubular sleeve for electrical insulation of an electrical conductor, the sleeve comprising interthreaded, fibrous yarns and an overcoating which is coated onto and substantially covers and seals the exterior surface of the tubular sleeve, characterised in that the sleeve comprises bulky continuous filament yarns which are rendered bulky by a texturising process such that the sleeve has a bulky interior.

Preferably the interthreaded yarns are braided or knitted.

A second aspect of the present invention provides an electrical apparatus comprising at least one electrical conductor having a sleeve surrounding and intimately contacting the conductor, the sleeve being a sleeve according to the first aspect of the present invention.

Preferably an electrically insulating impregnation composition is positioned substantially to fill the interior of the sleeve between the electrical conductor and the overcoating and especially preferably this impregnation is substantially void free.

A third aspect of the present invention provides a method for electrically insulating an elongate electrical conductor comprising positioning around the conductor at least a portion of a sleeve having an inside diameter which allows intimate contact of the interior of the sleeve with the exterior of the electrical conductor characterised in that the sleeve is a bulky sleeve according to the first aspect of the invention. The method preferably also comprising introducing an electrically insulating impregnation composition between the electrical conductor and the sleeve. The impregnation is preferably substantially void free.

The tubular sleeves of the first aspect of the present invention are interthreaded from continuous filament yarns. Continuous filament yarns are yarns in which each individual filament making up the yarn is of such a length that it extends substantially the entire length of the filament strand. Extruded man-made organic and inorganic fibres are examples of continuous filament yarns. Continuous filament yarns are to be contrasted with staple filament yarns. The individual filaments or fibres making up a staple filament yarn and much shorter than continuous filament yarns and must be spun (i.e. plied and twisted) together to form a yarn. the filaments are fibres of staple glass fibre are, for example, 15 to 38 cm (6 to 15 inches) long and the fibres are filaments of staple asbestos fibre and up to 30 cm (12 inches) long. All natural fibres except for silk are staple fibres.

The present invention uses continuous filament yarns which advantageously may be interthreaded, for example by braiding, much more easily than staple yarns which tend to fibrillate, even though spun into a filament.

Furthermore, continuous filament yarns have a lower intrinsic surface area compared to the spun filaments of natural fibre staple yarns and hence absorb or surface adsorb no water, or at least much less water than natural staple fibre yarns. This is advantageous since water detrimentally influences the electric properties of insulation and renders the insulation less desirable for electrical insulation even when such sleeving is overcoated. Moreover, any surface water must be removed before a natural staple fibre yarn sleeve is impregnated with most impregnation compositions.

The overcoated bulky sleeve is preferably expandable, deforming when positioned around a conductor to allow pull-back from the end of the conductor and return or fold-over. The sleeve is also preferably deformably/conformably expandable to accept conductor joints, while remaining substantially in intimate contact with the conductor by virtue of the interior bulkiness of the sleeve thereby providing a flexible cushion against wear. An electrical conductor insulated with such a sleeve is preferably impregnated with an impregnation composition, the large surface area of the interior of the sleeve promoting retention of the impregnation composition.

The tubular sleeves may be made, for example, by braiding or knitting, and are generally conformable and at least diametrically expandable, that is they conform to the general contours of an object, such as an elongate object, placed within and conformably/deformably expand to accept diameter transitions of an object placed within. The overcoating of the sleeves is preferably a flexible and/or expandable material, for example an expandable polymeric material, such as an acrylic, urethane, vinyl, or silicone polymer, and preferably the overcoated sleeves retain some conformability and diametric expandability. The overcoating moreover is preferably electrically insulating. The sleeves may be overcoated by any suitable process, such as an extrusion process or a solution coating process.

The bulky sleeves may be fabricated from bulky organic or bulky inorganic continuous filament yarns. Where they are to be used for electrical insulation of electrical conductors, the sleeves are selected to be electrically insulating. Examples of electrically insulating continuous filament yarns that may be used are electrical grades of fibreglass fibre, or polyester.

The sleeves are interthreaded from bulky continuous filament yarns, that is, yarns having a low density and a high surface area. These yarns typically have a density of about 70% or less, preferably from about 40% to about 60%, and most preferably from about 45% to about 55% of the density of non-bulky yarns of the same composition and diameter. The interior of sleeves interthreaded from such yarns are bulky and have a large surface area. The term interthreading is used herein to mean any method of threading together yarns to produce a sleeve and includes, but is not limited to, braiding and knitting.

Man-made inorganic yarns may be rendered bulky, or bulked, by known texturizing processes. Textured fiberglass yarn products are commercially available from, for example, PPG Industries, Inc., Fiberglass Division, under the product designations TEXO# and L.E.X. yarns. These textured yarns have lower density, higher bulk, thickness and coverage per pound than standard filament glass yarns, while still being of the continuous, multi-strand type. Bulky, electrical grade glassfibre yarns are preferred for the bulky sleeves according to this invention, especially because of the high thermal conductivity characteristic of glassfibre, which allows rapid dissipation of heat.

Man-made organic yarns may be rendered bulky or bulked by, for example, a false-twisting process. Continuous, multi-strand polyester yarns, by way of illustration but not limitation, are twisted together and heat treated to impart a shape, subsequently untwisted, and recombined, thereby producing a bulkier final yarn product. Bulky, electrical grade polyester yarns are preferred for the bulky organic yarn sleeves according to this invention, expecially where a polyester impregnation composition will be employed in the insulation process.

The interior bulkiness of the sleeves according to this invention allows intimate contact of the interior of the sleeve with the exterior of an electrical conductor to be electrically insulated placed therewithin. The interior bulkiness provides a flexible cushion which markedly reduces insulation failure due to mechanical forces, such as vibration-induced wearing-away of the insulation against other components of an electrical apparatus, thereby extending the useful life expectancy not only of the insulation but of the electrical apparatus itself.

The interior of an overcoated bulky sleeve according to this invention when positioned around an electrical conductor may be advantageously impregnated with an impregnation composition, such as a polymer, for some applications. Polymers, which may be used include thermal setting resins, such as epoxies, phenolics, polyesters and urethanes. These reactive systems may be cured with time or by the application of heat, rendering the reactive components into a less reactive or non-reactive thermoset resin. The large surface area of the interior of the sleeves according to this invention promotes resin retention and surprisingly, substantially void-free impregnations may be obtained.

An overcoated bulky sleeve according to this invention moreover provides a path for the introduction of impregnation composition by allowing introduction only through the open ends of the sleeve. Introduction of the impregnation composition may be by gravity, by the application of pressure, by aspiration by means of a vacuum, or especially preferably by a vacuum/pressure impregnation process. When the impregnation composition is introduced by means of the vacuum/pressure impregnation process a homogeneous, substantially void-free insulated electrical conductor results.

Preferably the sleeves are sufficiently expandable to allow the sleeve to be temporarily pulled-back along the electrical conductor to facilitate interconnection with the electrical apparatus and then repositionable along the electrical conductor after interconnection with the electrical apparatus. Conductor interconnection with the electrical apparatus may be by means of soldering, welding, brazing, bolting, or any other means. It is especially preferable that the sleeve be sufficiently expandable to allow the sleeve to be repositioned over the interconnection thereby electrically insulating the electrical conductor along its length and its interconnection with the electrical apparatus as well. The ratio of the circumference of the interconnection to the circumference of the electrical conductor is generally on the order of two to one, but may be as high as three to one, such as where bus bars are overlapped and bolted together. The overcoated bulky sleeves of this invention are sufficiently deformably/conformably expandable to accommodate such transitions.

An embodiment of the present invention will now be described, by way of example, with reference to the accompanying drawings, wherein:

FIGURE 1 is a cross-sectional view of a sleeve according to the present invention prior to overcoating;

FIGURE 2 is a cross-sectional view of the sleeve sleeve of Figure 1 after overcoating;

FIGURE 3 is a cross-sectional view of the sleeve of Figure 2 after positioning around an electrical conductor;

FIGURE 4 is a cross-sectional view of the arrangement of Figure 3 after an impregnation composition has been introduced through the open ends of the sleeve substantially to fill the interior of the sleeve between the electrical conductor and the overcoating;

FIGURE 5 is a perspective view, partially cut away, overcoated bulky sleeve positioned around and conforming to the contours of a rectangular bus bar.

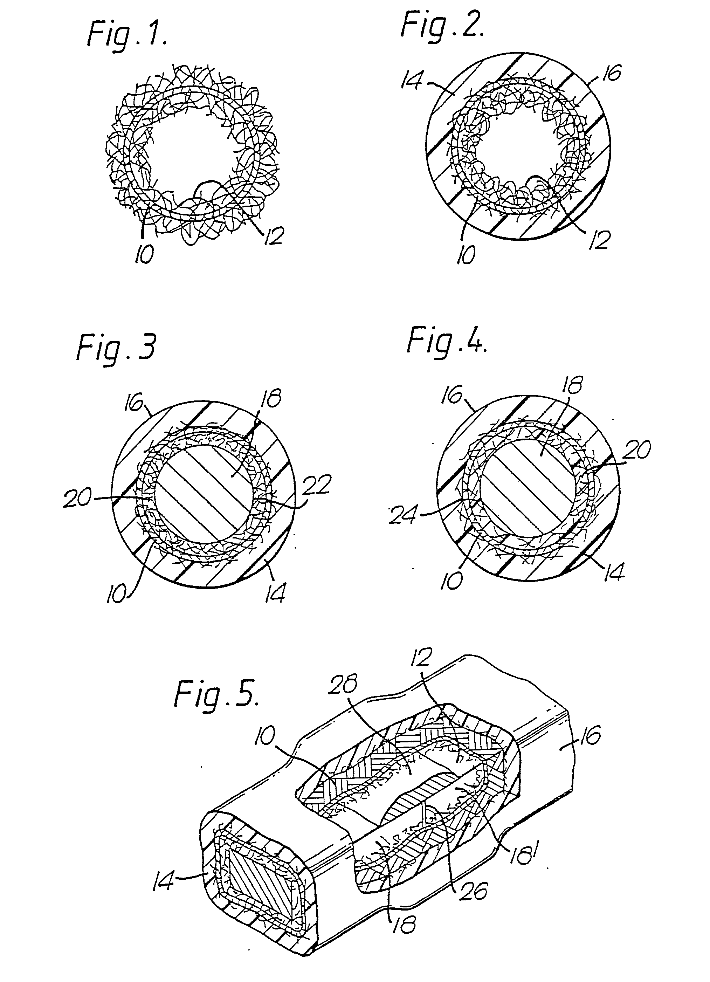

Referring to the drawings, Figure 1 shows a tubular bulky sleeve 10 which has been braided from low density, high surface area, continuous filament glass fibre yarns. The sleeve interior 12 has a large surface area. Figure 2 shows the same tubular bulky sleeve 10 after it has been overcoated with an overcoating 14 of an acrylic polymer, to produce an overcoated bulky sleeve 16 according to this invention. Any coating method which substantially covers and seals the exterior surface of the tubular bulky sleeve 10 is satisfactory, such as an extrusion coating method or a solution coating method.

Figure 3, shows the overcoated bulky sleeve 16 after it has been positioned around an electrical conductor 18. The fit of the sleeve 16 is important. The sleeve 16 has been selected to have an inside diameter which allows intimate contact of the interior of the sleeve 16 with the exterior of the electrical conductor 18 to be insulated. Interstices 20 are defined by the continuous yarn fibres 22 of the interior of the sleeve 12 as they intimately contact the electrical conductor 18. It is the collective flexible cushioning effect of the overcoated bulky sleeve 16 which provides the desired resistance to mechanical deterioration as well as the desired electrical insulation.

Figure 4 shows the overcoated bulky sleeve 16 of Figure 3 after impregnation with an impregnation composition 24 substantially to fill the interstices 20 of the sleeve interior 12 between the electrical conductor 18 and the overcoating 14. Impregnation is produced using a vacuum/pressure impregnation process thereby providing a homogeneous, substantially void-free insulated electrical conductor 18.

In Figure 5, the conformable/deformable expandability of the overcoated bulky sleeve 16 according to this invention is demonstrated. Figure 5 is a cut-away perspective view of an overcoated bulky sleeve 16 positioned around and conforming to the contours of a rectangular bus bar 18. The rectangular bus bar 18 has been joined to another rectangular bus bar 18' to form a butt-style interconnection 26 which has been soldered, the excess solder mass shown generally at 28. The overcoated bulky sleeve 16 has deformably expanded to accept the greater circumference of the interconnection 26.

## Claims

1. A tubular sleeve for electrical insulation of an electrical conductor (10), the sleeve comprising interthreaded, fibrous yarns and an overcoating (14) which is coated onto and substantially covers and seals the. exterior surface of the tubular sleeve characterised in that the sleeve comprises bulky continuous filament yarns which are rendered bulky by a texturising process such that the sleeve has a bulky interior (12).

2. A sleeve according to Claim 1, wherein the continuous filament bulky yarns are inorganic yarns, preferably glass fibre yarns.

3. A sleeve according to Claim 1, wherein the continuous filament bulky yarns are organic yarns preferably polyester yarns.

4. A sleeve according to Claim 1, 2 or 3, wherein the tubular sleeve or the overcoating (14) or both are electrical insulating.

5. A sleeve according to any preceding Claim, wherein the overcoated sleeve (16) is diametrically expandable.

6. A sleeve according to any preceding claim, wherein the overcoating (14) comprises a polymer or a ceramic, preferably an acrylic polymer or a vinyl polymer or a silicone polymer or a urethane polymer.

7. A sleeve according to any preceding claim, wherein the bulky yarns have a density of about 70% or less of the density of non-bulky yarns of the same composition preferably a density of from about 40% to about 60% of the density of non-bulky yarns of the same composition and especially preferably a density of from about 45% to about 55% of the density of non-bulky yarns of the same composition.

8. An electrical apparatus comprising at least one electrical conductor (18) having a sleeve surrounding and intimately contacting said conductor, the sleeve being characterised by any preceding claim.

9. An electrical apparatus according to Claim 8, comprising an electrically insulating impregnation composition (24) positioned substantially to fill the interior of the sleeve between the electrical conductor (18) and the overcoating (14).

10. An electrical apparatus according to Claim 9, wherein the impregnation composition (24) comprises a curable polymer preferably an epoxy polymer or a phenolic polymer or a urethane polymer or a polyester polymer.

11. A method for electrically insulating an elongate electrical conductor (18), comprising positioning at least a portion of a sleeve around the elongate conductor (18), the sleeve having an inside diameter which allows intimate contact of the interior of the sleeve with the exterior of the electrical conductor characterised in that the sleeve is a bulky sleeve according to any one of claims 1 to 7.

12. A method according to Claim 11, comprising substantially filling the interior of the sleeve by introducing an electrically insulating impregnation composition (24) between the electrical conductor and the overcoating.

13. A method according to Claim 12, wherein the step of filling the interior of the sleeve by introducing an electrically insulating impregnation composition (24) comprises a vacuum/pressure impregnation process.

14. A method according to Claim 12 or 13, wherein the impregnation composition (24) comprises a curable polymer, and which further comprises the step of curing the polymer.

## Revendications

1. Manchon tubulaire pour l'isolation électrique d'un conducteur électrique (10), ce manchon comportant des fils fibreux entrelacés et un revêtement (14) qui est déposé sur et recouvre et étanchéifie pour l'essentiel la surface extérieure du manchon tubulaire, caractérisé en ce que le manchon comporte des fils de filaments continus gonflants qui sont rendus gonflants par un processus de texturation tel que le manchon possède un intérieur volumineux (12).

2. Manchon selon la revendication 1, dans lequel les fils de filaments continus gonflants sont des fils inorganiques, de préférence des fils de fibres de verre.

3. Manchon selon la revendication 1, dans lequel les fils de filaments continus gonflants sont des fils organiques, de préférence, des fils de polyester.

4. Manchon selon la revendication 1, 2, 3, dans lequel le manchon tubulaire ou le revêtement (14) ou ces deux éléments sont électriquement isolants.

5. Manchon selon l'une quelconque des revendications précédentes, dans lequel le manchon recouvert (16) est expansible suivant son diamètre.

6. Manchon selon l'une quelconque des revendications précédentes, dans lequel le revêtement (14) inclut un polymère ou une céramique, de préférence un polymère acrylique ou un polymère de vinyle ou un polymère de silicone ou un polymère d'uréthane.

7. Manchon selon l'une quelconque des revendications précédentes, dans lequel les fils gonflants possèdent une densité égale ou inférieure à environ 70% de la densité des fils non gonflants de même composition, de préférence une densité comprise entre environ 40% et environ 60% de la densité des fils non gonflants possédant la même composition et en particulier une densité comprise entre environ 45% et environ 55% de la densité des fils non gonflants possédant la même composition.

8. Appareil électrique comprenant au moins un conducteur électrique (18) et comportant un manchon entourant et contactant de façon intime ledit conducteur, le manchon étant caractérisé par l'une quelconque des revendications précédentes.

9. Appareil électrique selon la revendication 8, comportant une composition d'imprégnation électriquement isolante (24) disposée de manière à remplir pour l'essentiel l'intérieur du manchon entre le conducteur électrique (18) et le revêtement (14).

10. Appareil électrique selon la revendication 9, dans lequel la composition d'imprégnation (24) comporte un polymère durcissable, de préférence un polymère époxy ou un polymère phénolique ou un polymère d'uréthane ou un polymère de polyester.

11. Procédé pour isoler électriquement un conducteur électrique allongé (18), incluant le positionnement d'au moins une partie d'un manchon autour du conducteur allongé (18), le manchon possédant un diamètre intérieur permettant un contact intime de son intérieur avec l'extérieur du conducteur électrique, caractérisé en ce que le manchon est un manchon volumineux conforme à l'une quelconque des revendications 1 à 7.

12. Procédé selon la revendication 11, incluant le remplissage essentiellement de l'intérieur du manchon par introduction d'une composition électriquement isolante (24) entre le conducteur électrique et le revêtement.

13. Procédé selon la revendication 12, selon lequel la phase opératoire de remplissage à l'intérieur du manchon par introduction d'une composition d'imprégnation électriquement isolante (24) comprend un procédé d'imprégnation sous vide/sous pression.

14. Procédé selon la revendication 12 ou 13, selon lequel la composition d'imprégnation (24) comporte un polymère durcissable, et qui inclut en outre la phase opératoire de durcissement du polymère.

## Patentansprüche

1. Rohrförmige Muffe zur elektrischen Isolierung eines elektrischen Leiters (10), wobei die Muffe ineinandergewundene Fasergarne und einen Mantelüberzug (14) aufweist, der auf der Außenfläche der rohrförmigen Muffe aufgebracht ist und die Außenfläche derselben im wesentlichen abdeckt und abdichtet, dadurch gekennzeichnet, daß die Muffe voluminöse Filamentgarne aufweist, die durch ein Texturierverfahren derart voluminös gemacht wird, daß die Muffe ein voluminöses Inneres (5) hat.

2. Muffe nach Anspruch 1, dadurch gekennzeichnet, daß die voluminösen Filamentgarne anorganische Fäden, vorzugsweise Glasfasern, sind.

3. Muffe nach Anspruch 1, dadurch gekennzeichnet, daß die voluminösen Filamentgarne organische Fäden, vorzugsweise Polyesterfäden sind.

4. Muffe nach Anspruch 1, 2 oder 3, dadurch gekennzeichnet, daß die rohrförmige Muffe oder der Mantelüberzug (14) oder beide elastisch isolierend sind.

5. Muffe nach einem der vorangehenden Ansprüche, dadurch gekennzeichnet, daß die mit einem Mantelüberzug versehene Muffe (16) in Durchmesserrichtung expandierbar ist.

6. Muffe nach einem der vorangehenden Ansprüche, dadurch gekennzeichnet, daß der Mantelüberzug (14) ein Polymer oder ein Keramikmaterial, vorzugsweise ein Acrylpolymer oder ein Vinylpolymer, oder ein Silikonpolymer oder ein Urethanpolymer aufweist.

7. Muffe nach einem der vorangehenden Ansprüche, dadurch gekennzeichnet, daß die voluminösen Fäden eine Dichte von etwa 70% oder weniger der Dichte der nichtvoluminösen Fäden derselben Zusammensetzung, vorzugsweise eine Dichte von etwa 40% bis etwa 60% der Dichte der nicht-voluminösen Fäden derselben Zusammensetzung, insbesondere vorzugsweise eine Dichte von etwa 45% bis etwa 55% der Dichte der nicht-voluminösen Fäden derselben Zusammensetzung haben.

8. Elektrische Einrichtung, die wenigstens einen elektrischen Leiter (18) aufweist, der eine Muffe hat, die den Leiter umgibt und in innigem Kontakt mit demselben ist, dadurch gekennzeichnet, daß die Muffe gemäß einem der vorangehenden Ansprüche ausgebildet ist.

9. Elektrische Einrichtung nach Anspruch 8, dadurch gekennzeichnet, daß eine elektrisch isolierende Imprägniermasse (24) angebracht ist, die im wesentlichen das Innere der Muffe zwischen dem elektrischen Leiter (18) und dem Mantelüberzug (14) ausfüllt.

10. Elektrische Einrichtung nach Anspruch 9, dadurch gekennzeichnet, daß die Imprägniermasse (24) ein härtbares Polymer, vorzugsweise ein Epoxypolymer oder ein Vinylpolymer oder ein Urethanpolymer oder ein Polyesterpolymer aufweist.

11. Verfahren zum elektrischen Isolieren eines länglichen elektrischen Leiters (18), bei dem wenigstens ein Teil einer Muffe um den länglichen Leiter (18) gelegt wird, wobei die Muffe einen Innendurchmesser hat, der einen innigen Kontakt des Inneren der Muffe mit dem Äußeren des elektrischen Leiters ermöglicht, dadurch gekennzeichnet, daß die Muffe eine voluminöse Muffe nach einem der Ansprüche 1 bis 7 ist.

12. Verfahren nach Anspruch 11, dadurch gekennzeichnet, daß das Innere der Muffe durch Einbringen einer elektrisch isolierenden Imprägniermasse (24) zwischen den elektrischen Leiter und den Mantelüberzug im wesentlichen aufgefüllt wird.

13. Verfahren nach Anspruch 12, dadurch gekennzeichnet, daß der Schritt zum Auffüllen des Inneren der Muffe durch Einbringen einer elektrisch isolierenden Imprägniermasse (24) ein Vakuum/Druck-Imprägnierverfahren aufweist.

14. Verfahren nach Anspruch 12 oder 13, dadurch gekennzeichnet, daß die Imprägniermasse (24) ein härtbares Polymer aufweist und daß ferner der Schritt zum Aushärten des Polymers vorgesehen ist.

0 077 665

Fig.1.

Fig.2.

Fig.3

Fig.4.

Fig.5.